Europäisches Patentamt

European Patent Office

Office européen des brevets

(19)

(11) Veröffentlichungsnummer: **0 250 724 B1**

(12) # EUROPÄISCHE PATENTSCHRIFT

(45) Veröffentlichungstag der Patentschrift:
18.12.91 Patentblatt 91/51

(51) Int. Cl.$^5$: **B23B 5/22, B23B 31/16,
B23B 31/10**

(21) Anmeldenummer: **87104561.3**

(22) Anmeldetag: **27.03.87**

---

(54) Dreibacken-Spannfutter für Drehmaschinen.

---

(30) Priorität: **04.07.86 DE 3622453**

(43) Veröffentlichungstag der Anmeldung:
**07.01.88 Patentblatt 88/01**

(45) Bekanntmachung des Hinweises auf die
Patenterteilung:
**18.12.91 Patentblatt 91/51**

(84) Benannte Vertragsstaaten:
**AT DE ES FR GB IT SE**

(56) Entgegenhaltungen:
**DE-A- 3 446 687
DE-C- 290 512
FR-A- 2 040 517
US-A- 3 373 641**

(56) Entgegenhaltungen:
**US-A- 4 040 315
US-A- 4 467 681
SOVIET INVENTIONS ILLLUSTRATED Sektion
Mechanik, Woche 84/26, Zusammenfassung
Nr. 163536, P54, 8. August 1984, Derwent Publications Ltd., London,GB; & SU - A - 1 047 607
(V.F. GORELIKOW)**

(73) Patentinhaber: **Röhm, Günter Horst
Heinrich-Röhm-Strasse 50
W-7927 Sontheim (DE)**

(72) Erfinder: **Röhm, Günter Horst
Heinrich-Röhm-Strasse 50
W-7927 Sontheim (DE)**

(74) Vertreter: **Fay, Hermann, Dipl.-Phys. Dr.
Ensingerstrasse 21 Postfach 1767
W-7900 Ulm (Donau) (DE)**

---

EP 0 250 724 B1

## Beschreibung

Die Erfindung betrifft ein Dreibacken-Spannfutter für Drehmaschinen zum Spannen von Werkstücken in Bezug auf eine zur Drehachse des Spannfutters exzentrische Spannachse, insbes. von Kurbelwellen, mit einer Einrichtung zur Änderung des Achsenabstands zwischen der Drehachse und der dazu parallelen Spannachse innerhalb eines Achsenabstandsbereichs längs einer radial durch die Drehachse gehenden Achsenabstandsrichtung, wobei eine der Spannbacken mit ihrer Spannfläche die in Achsenabstandsrichtung durch die Drehachse gehende Achsenabstandsebene senkrecht zur Achsenabstandsrichtung schneidet und so verstellbar ist, daß sich die Lage der Spannfläche in Achsenabstandsrichtung ändert, und wobei die dieser Spannbacke gegenüber liegenden beiden anderen Spannbacken auf je einer Seite der Achsenabstandsebene in zu ihr spiegelsymmetrisch geneigten Führungen verstellbar angeordnet und gemeinsam antreibbar sind.

Spannfutter dieser Art ermögliches es, durch Änderung des Achsenabstandes zwischen der Drehachse und der Spannachse beispielsweise Kurbelwellen bei im wesentlichen gleichbleibendem Spanndurchmesser, jedoch verschiedenen Kurbelhüben auf einer Drehmaschine zu bearbeiten. Eine Anpassung an andere Spanndurchmesser ist durch Austauschen von an den Spannbacken auswechselbaren Aufsatzbacken möglich. Zu dieser Änderung des Achsenabstandes besitzen bekannte Spannfutter der eingangs genannten Art eine axial auf der Drehmaschinenspindel befestigbare Futterbasis und einen Spannkopf, in dessen in Achsenabstandsrichtung verschiebbar an der Futterbasis geführtem Spannkopfkörper alle drei Spannbacken radial zur Spann-nachse verschiebbar geführt und gemeinsam, z. B. über axial bewegliche Keilstangen durch einen in der Futterbasis axial verstellbaren Treibkolben, zentrisch in Bezug auf die Spannachse antreibbar sind. Zum Unwuchtausgleich dienen gegenläufig zum Spannkopf verstellbare Gegengewichte.

Im einzelnen kann die Futterbasis im Prinzip ein den Anschluß an die Drehmaschinenspindel ermöglichender Futterflansch sein, an dem der Spannkopf verschiebbar geführt und in seiner Führung dadurch feststellbar ist, daß er mittels einer Stellspindel über ein seine Stellung bestimmendes Distanzstück gegen die Futterbasis verspannt wird. Im Spannkopf sind die Spannbacken und die Keilstangen geführt, die axial formschlüssig, jedoch in Verstellrichtung des Spannkopfes verschiebbar an einer sie mit dem Treibkolben verbindenden und am Treibkolben festen Spannplatte eingehängt sind. Im Spannkopf befindet sich im übrigen eine das Werkstück vor seiner Einspannung ausrichtende Werkstückaufnahme mit einem Richtbackenpaar, dessen bewegliche Richtbacke ebenfalls am Spannkopf geführt ist. Zur Betätigung dieser Richtbacke dient eine eigene axial bewegliche Keilstange, die ähnlich den Keilstangen für die Spannbacken verschiebbar an einer zweiten Spannplatte eingehängt ist, die fest an einen zum Antrieb nur der Richtbacke vorgesehenen zweiten Treibkolben angeschlossen ist, der koaxial zum Treibkolben für die Spannbacken und zur Drehachse der Futterbasis in letzterer geführt ist. Im Ergebinis bildet der Spannkopf bis auf die Spannplatten und die Treibkolben ein komplettes Backenspannfutter, das entsprechend dem Kurbelhub des Werkstückes an der Futterbasis verstellbar ist. Die Gegengewichte zum Unwuchtausgleich sind am Spannkopf verschiebbar geführt. Sie dienen dazu, die durch Verschiebung des Spannkopfes an der Futterbasis entstehenden Unwuchten möglichst zu kompensieren, wozu sie am Spannkopf gegenläufig zu dessen eigener Verschiebung verstellt und in ihrer jeweiligen Stellung wiederum mittels einer Spindel über passende Distanzstücke gegen den Spannkopf verspannt werden. - Nachteilig ist bei solchen Spannfuttern, daß die Masse des verstellbaren Spannkopfes verhältnismäßig groß ist, daß die Massen der Gegengewichte zum Unwuchtausgleich in gleichem Maße groß sein müssen, und daß daher auch die letztenendes immer verbleibenden Restunwuchten, die von den Lagern der Drehmaschinenspindel aufgenommen werden müssen, entsprechend groß sind und die Spindellager hoch belasten. Desweiteren ist die Einstellung des Spannkopfes und der Gegengewichte umständlich und aufwendig, da diese Einstellungen jeweils eigene Arbeitsgänge bedingen und außerdem die nach jeweils geschehener Einstellung erfolgende Verspannung zur Fixierung der Einstellung einen weiteren eigenen Arbeitsgang erfordern, der oft nicht ohne Rückwirkung auf die Einstellung selbst bleibt.

Diese Nachteile werden bei einem aus der DE-OS 34 46 687 bekannten anderen Spannfutter der eingangs genannten Art dadurch gemindert, daß der Spannkopfkörper als in Achsenabstandsrichtung verstellbarer Schieber ausgebildet ist, dessen Breite quer zur Verschiebungsrichtung kleiner als der Durchmesser der Futterbasis ist, daß die beidseits des Spannkopfkörpers an der Futterbasis angeordneten und geführten Gegengewichte zum Unwuchtausgleich durch je ein Getriebe gegenläufig mit dem Spannkopfkörper verbunden sind, und daß die beiden spiegelsymmetrisch zur Achsenabstandsebene angeordneten Spannbacken mit gegenüber der des Spannkopfkörpers geneigter Verschiebungsrichtung in ein inneres Backenteil und ein äußeres Backenteil getrennt sind, von welchen das innere Backenteil im Spannkopfkörper und das äußere Backenteil mit der an ihm angreifenden Keilstange in der Futterbasis geführt sind und beide Backenteile in einer durch Hinterschneidung formschlüssigen und parallel zur Verschiebungsrichtung des Spannkopfkörpers verlaufenden Geradführung miteinander im Eingriff stehen. Die in der Achsenabstandsrichtung verstellbare Spannbacke ist ohne Trennung in inneres und äußeres Backenteil einstückig ausgebildet und mit ihrer Keilstange allein im

2

EP 0 250 724 B1

Spannkopfkörper geführt. Die sie antreibende Keilstange ist axial formschlüssig, in Verschiebungsrichtung des Spannkopfkörpers aber verschiebbar an einer auch die Keilstangen für die anderen Spannbacken mit ihrem Treibkolben verbindenden Spannplatte eingehängt. Auch die quer zur Achsenabstandsebene verstellbare und antreibbare Richtbacke ist in ein im Spannkopfkörper geführtes inneres Backenteil und in ein äußeres Backenteil getrennt, das mit seiner Keilstange und einem die Richtbacke betätigenden Treibkolben in der Futterbasis geführt und mit dem inneren Backenteil in einer durch Hinterschneidung formschlüssigen und parallel zur Verschiebungsrichtung des Spannkopfkörpers verlaufenden Geradführung im Eingriff steht. Im Ergebnis bilden die äußeren Bakkenteile und die zu ihnen gehörenden Keilstangen keine Teile des Spannkopfes, nehmen also auch an dessen Verschiebung nicht teil und leisten somit keinen Beitrag zu Unwuchtänderungen. Äußere und innere Backenteile sind mit dem Spannkopf gegeneinander in den sie verbindenden Geradführungen, beispielsweise Schwalbenschwanz- oder T-Nutführung, verschiebbar, in der Verstellrichtung der Spannbacken selbst aber formschlüssig aneinander gekuppelt, so daß die inneren Backenteile an jeder Verstellbewegung der äußeren Backenteile unabhängig von der Einstellung des Spannkopfes an der Futterbasis teilnehmen müssen. Daher kann der nur die inneren Backenteile und die in Achsenabstandsrichtung verstellbare Spannbacke enthaltende Spannkopfkörper entsprechend schmal und leicht an Masse ausgebildet werden, so daß die entsprechend ebenfalls kleineren Gegengewichte für den Unwuchtausgleich beidseits neben dem Spannkopfkörper Platz finden und an der Futterbasis angeordnet und geführt werden können, wodurch sich insgesamt eine massearme, kompakte und platzsparende Bauweise ergibt. Darüber hinaus ermöglicht dies die unmittelbare Getriebeverbindung des Spannkopfkörpers mit den Gegengewichten, so daß letztere dich bei Änderung der Spannkopfeinstellung entsprechend selbsttätig verstellen und so automatisch die Unwuchtkompensation bewirken. - Andererseits ist ein solches Spannfutter im Aufbau kompliziert und aufwendig.

Der Erfindung liegt die Aufgabe zugrunde, ein Spannfutter der eingangs genannten Art so auszubilden, daß es konstruktiv einen möglichst einfachen Aufbau hat, dennoch aber bezüglich des Achsenabstandes leicht und schnell verstellbar ist, und daß bei dieser Verstellung nur möglichst wenige und massearme Teile bewegt werden, so daß die Unwuchtänderungen klein und die zu ihrem Ausgleich dienenden Gegengewichte entsprechend leicht sind.

Diese Aufgabe wird nach der Erfindung dadurch gelöst, daß die mit ihrer Spannfläche die Achsenabstandsebene schneidende Spannbacke einerseits und die beiden gemeinsamen antreibbaren Spannbacken andererseits unabhängig voneinander in bzw. an einem Futterkörper verstellbar sind, der seinerseits unverstellbar an der Drehspindel der Drehmaschine sitzt, daß die beiden gemeinsam antreibbaren Spannbacken stirnseitig je eine auf der Führungsrichtung ihrer Spannbacke senkrecht stehende ebene Spannfläche aufweisen, und daß in mindestens einer zur Drehachse senkrechten und diese Spannflächen schneidenden Ebene bei jeder der beiden gemeinsam antreibbaren Spannbacken die auf die Ebene ihrer Spannfläche senkrechte Projektion des Achsenabstansdbereichs in der Spannfläche liegt.

Bei dem erfindungsgemäßen Spannfutter ist auf die bisherige Teilung in Futterbasis und ihr gegenüber verstellbaren Spannkopf verzichtet; alle drei Spannbacken befinden sich an einem einheitlichen Futterkörper, der seinerseits unverstellbar fest an die Drehspindel anzuschließen ist. Zur Änderung des Achsenabstandes ist nur die mit ihrer Spannfläche die Achsenabstandsebene schneidende Spannbacke in Achsenabstandsrichtung am Futterkörper zu vestellen. Die damit noch verbundene Unwuchtänderung ist gering, so daß auch nur kleine Gegengewichte mit kurzen Verstellwegen erforderlich sind, die Gegengewichte also unschwer im Futterkörper untergebracht und mit der Verstellbewegung der Spannbacke gekoppelt werden können, um einen automatischen Unwuchtausgleich zu ermöglichen. Beim Spannen des Werkstücks dagegen bleibt diese Spannbacke fest stehen. Der Spannvorgang erfolgt nur durch die beiden gemeinsam angetriebenen, zur Achsenabstandsebene symmetrisch angeordneten Spannbacken, die das Werkstück zentrisch gegen die dabei nur als feststehendes Auflager dienende, die Achsenabstandsebene schneidende Spannfläche der dritten Spannbacke drücken. Durch die erfindungsgemäße Anordnung und Ausbildung der Spannfläche der beiden gemeinsam angetriebenen Spannbacken ist sicher gestellt, daß bei jeder Lage der Spannachse innerhalb des Achsenabstandsbereichs die Spannflächen tangential am Werkstückumfang anliegen und die Spannkräfte radial zur Spannachse auf das Werkstück einwirken. Bei kleinem Achsenabstand erfolgt die Anlage des Werkstücks lediglich weiter innen, bei größerem Achsenabstand weiter außen an den Spannflächen, gesehen jeweils von der dritten, beim Spannvorgang feststehenden Spannbacke aus.

Zur Ausrichtung des Werkstücks vor dem Spannvorgang dienen vorzugsweise zwei am Futterkörper senkrecht zur Achsenabstandsebene sich gegenüber liegende und verstellbare Richtbacken, von welchen eine antreibbar ist, und die beide zur Achsenabstandsebene parallele Richtflächen aufweisen, die sich in Achsenabstandsrichtung mindestens über die Länge des Achsenabstandsbereichs erstrecken. Dadurch ist auch für die Richtbacken sichergestellt, daß ihre Richtflächen bei jeder Lage der Spannachse innerhalb des Achsenabstandsbereichs am Werkstück zur Anlage kommen.

Eine besonders bevorzugte Ausführungsform der Erfindung ist dadurch gekennzeichnet, daß die mit ihrer

3

Spannfläche die Achsenabstandsebene schneidende Spannbacke als eine Revolverscheibe ausgebildet ist, die mit zur Drehachse paralleler Revolverachse am Futterkörper drehbar gelagert und in Drehrichtung schrittweise antreibbar sowie in den verschiedenen Schrittstellungen feststellbar ist, daß die Spannfläche zu mehreren entlang dem Umfang der Revolverscheibe mit jeweils anderem radialen Abstand von der Revolverachse angeordnet ist, und daß diese Spannflächen den verschiedenen Schrittstellungen der Revolverscheibe derart zugeordnet sind, daß in jeder Schrittstellung jeweils eine der Spannflächen die Achsenabstandsebene schneidet. Zur Änderung des Achsenabstands ist es dann nur noch erforderlich, die Revolverscheibe in diejenige Schrittstellung zu bringen, in der die dieser Schrittstellung zugeordnete Spannfläche an der Revolverscheibe die gewünschte Lage der Spannachse für das Werkstück ergibt. Zweckmäßig sind die Spannflächen an Einsätzen der Revolverscheibe ausgebildet. Durch Austausch der Einsätze ist es dann unschwer möglich, nicht nur weiteren Achsenabständen, sondern auch anderen Spanndurchmessern Rechnung zu tragen. Im einzelnen empfiehlt es sich, die Spannfläche bzw. Spannflächen an der Revolverscheibe als Zylinderschalen, insbes. Zylinderhalbschalen, mit in Spannstellung zur Spannachse koaxialer Zylinderachse auszubilden. Der Radius der Zylinderschalen kann dabei dem jeweiligen Spanndurchmesser des Werkstücks angepaßt werden, so daß das Werkstück in der jeweiligen Zylinderschale eine formschlüssige Aufnahme findet.

Nach einem weiteren Vorschlag der Erfindung ist ein zum Unwuchtausgleich dienendes Gegengewicht durch die sich drehende Revolverscheibe verstellbar. Der Antrieb des Gegengewichtes erfolgt also durch die Revolverscheibe. Zweckmäßig kann dazu die Revolverscheibe einen zur Revolverachse koaxialen Wellenzapfen aufweisen, der über eine Steuerkurve das im Futterkörper in Achsenabstandsrichtung verschiebbar geführte Gegengewicht antreibt, das zumindest in seinen den verschiedenen Schrittstellungen der Revolverscheibe entsprechenden Lagen im Futterkörper auch feststellbar ist, so daß unerwünschte Lageänderungen des Gegengewichtes bei laufendem Spannfutter sicher vermieden werden. Die Revolverscheibe selbst ist zweckmäßig auf beiden Seiten gelagert, wozu stirnseitig am Futterkörper eine die Revolverscheibe übergreifende Lagertraverse vorgesehen ist.

Die Führungen der beiden gemeinsam antreibbaren Spannbacken sind zweckmäßig als Geradführungen ausgebildet, deren in Führungsrichtung verlaufenden Mittelachsen sich in der Abstandsebene in der Mitte des Achsenabstandsbereichs schneiden. Dann sind bei Änderung des Achsenabstands vom kleinsten zum größten Abstand die entsprechenden Versetzungen der Werkstückanlage an den Spannflächen gegenüber der Mittelachse der jeweiligen Spannbackenführung auf maximal die Hälfte des Achsenabstandsbereichs beschränkt.

Im folgenden wird die Erfindung an einem in der Zeichnung dargestellten Ausführungsbeispiel näher erläutert; es zeigen:

Fig. 1 einen Axialschnitt durch ein kraftbetätigtes Dreibacken-Spannfutter nach der Erfindung, entsprechend dem Schnitt I - I in Fig. 1a,

Fig. 1a die Stirnansicht, teils mit weggebrochenen Partien, des Spannfutters nach Fig. 1 in Richtung des dort eingetragenen Pfeiles 1a,

Fig. 2 den Schnitt II - II durch den Gegenstand der Fig. 1,

Fig. 3 den Schnitt III - III in Fig. 1a,

Fig. 4 den Schnitt IV - IV in Fig. 1a,

Fig. 5 den Schnitt V - V in Fig. 1,

Fig. 6 den Schnitt VI - VI in Fig. 1,

Fig. 7 den Schnitt VII - VII in Fig. 1a.

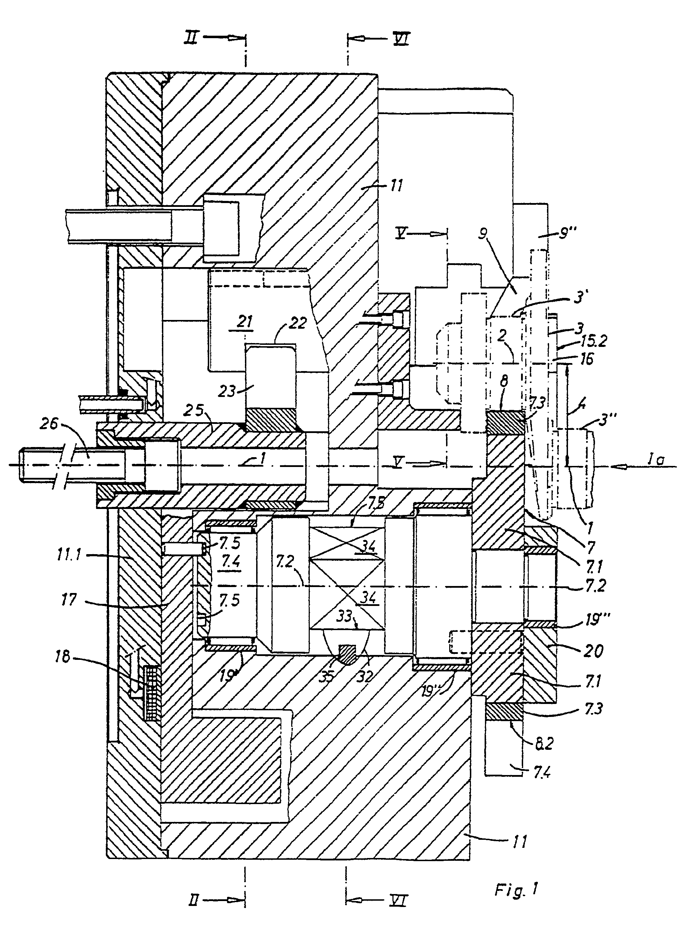

Das in der Zeichnung dargestellte Spannfutter dient zum Spannen von Kurbelwellen in Bezug auf einen zur Drehachse 1 des Spannfutters exzentrische Spannachse 2. Die Kurbelwelle ist in den Fig. 1 und 1a jeweils bei 3 strichpunktiert angedeutet. Sie wird im Wellenbereich 3' eingespannt, wobei die Achse dieses Wellenbereichs die Spannachse 2 darstellt. Im Wellenbereich 3'' soll die Kurbelwelle 3 bearbeitet werden. Die Achse dieses Wellenbereichs 3'' stimmt also überein mit der Drehachse 1. Um Kurbelwellen mit verschiedenen Kurbelhüben, im übrigen aber gleichem Spanndurchmesser bearbeiten zu können, ist der Achsenabstand 4 (Fig. 1) zwischen der Drehachse 1 und der dazu parallelen Spannachse 2 innerhalb eines in Fig. 1a durch den Doppelpfeil 5 gekennzeichneten Achsenabstandsbereichs längs einer radial durch die Drehachse 1 gehenden, in Fig. 1a vertikal verlaufenden Achsenabstandsrichtung 6-6 veränderbar. Dies wird dadurch möglich, daß eine allgemein mit 7 bezeichnete Spannbacke mindestens eine Spannfläche 8 aufweist, die die in Achsenabstandsrichtung 6-6 durch die Drehachse 1 gehende Achsenabstandsebene (die also in Fig. 1 in der Zeichenebene liegt, in Fig. 1a auf der Zeichenebene senkrecht steht) senkrecht zur Achsenabstandsrichtung 6-6 schneidet. Die Spannbacke 7 ist im übrigen in noch näher zu beschreibender Weise so verstellbar, daß sich die Lage dieser Spannfläche 8 in Achsenabstandsrichtung 6-6 entsprechend der gewünschten Spannachsenlage ändert. Die dieser Spannbacke 7 gegenüber liegenden beiden anderen Spannbacken 9 sind auf je einer Seite der Achsenabstandsebene in zu ihr spiegelsymmetrisch geneigten Führungen 10 verstellbar angeordnet und gemeinsam zentrisch spannend antreibbar. Die mit ihrer Spannfläche 8 die Achsenabstandsebene schneidende

4

Spannbacke 7 einerseits und die beiden gemeinsam antreibbaren, zentrisch spannenden Spannbacken 9 andererseits sind unabhängig voneinander in bzw. an einem Futterkörper 11 verstellbar. Dieser Futterkörper 11 ist seinerseits mit einem Futterflansch 11.1 in üblicher Weise unverstellbar am Kopf der nicht dargestellten Drehspindel der Drehmaschine befestigt. Die beiden gemeinsam antreibbaren, zentrisch spannenden Spannbacken 9 besitzen stirnseitig je eine auf der Führungsrichtung 12-12 ihrer Spannbacke 9 senkrecht stehende ebene Spannfläche 13. In mindestens einer zur Drehachse 1 senkrechten und diese Spannflächen 13 schneidenden, in Fig. 1a beispielsweise mit der Zeichenebene zusammenfallenden Ebene liegt bei jeder der beiden gemeinsam antreibbaren Spannbacken 9 die auf die Ebene ihrer Spannfläche 13 senkrechte Projektion des Achsenabstandsbereichs 5 in der Spannfläche 13. Diese Projektion ist in Fig. 1a durch die gestrichelten Geraden 14 angedeutet. Am Futterkörper 11 sind weiter zwei senkrecht zur Achsenabstandsebene sich gegenüber liegende und verstellbare Richtbacken 15.1, 15.2 vorgesehen, von welchen die in Fig. 1a rechte Richtbacke 15.2 antreibbar ist. Beide Richtbacken 15.1, 15.2 besitzen zur Achsenabstandsebene parallele Richtflächen 16, die sich in Achsenabstandsrichtung 6-6 mindestens über den Achsenabstandsbereich 5 erstreden, in Fig. 1a also in denkrechter Richtung eine Länge besitzen, die mindestens gleich der Länge des Achsenabstandsbereiches 5 ist.

Die Spannbacke 7 ist als eine Revolverscheibe 7.1 ausgebildet, die mit zur Drehachse 1 paralleler Revolverachse 7.2 am Futterkörper 11 drehbar gelagert und in Drehrichtung schrittweise antreibbar sowie in den verschiedenen Schrittstellungen feststellbar ist. Mehrere der Spannflächen 8, 8.1, 8.2, 8.3 sind entlang dem Umfang der Revolverscheibe 7.1 mit jeweils anderem radlalen Abstand von der Revolverachse 7.2 angeordnet. Diese Spannflächen 8, 8.1, 8.2, 8.3 sind den verschiedenen Schrittstellungen der Revolverscheibe 7.1 derart zugeordnet, daß in jeder Schrittstellung jeweils eine der Spannflächen die Achsenabstandsebene senkrecht schneidet. Die Spannflächen 8, 8.1, 8.2, 8.3 sind an Einsätzen 7.3 der Revolverscheibe 7.1 in Form von Halbzylinderschalen 7.4 ausgebildet, wobei die Zylinderachse bei in Spannstellung stehender Spannfläche 8. 8.1, 8.2, 8.3 mit der Spannachse 2 koaxial ist und der Zylinderradius gleich dem Radius des Spannkreises ist.

Zum Unwuchtausgleich ist ein Gegengewicht 17 vorgesehen, das durch die sich drehende Revolverscheibe 7.1 verstellbar ist. Dazu besitzt die Revolverscheibe 7.1 einen zur Revolverachse 7.2 koaxialen Wellenzapfen 7.4, der über eine Steuerkurve 7.5 das im Futterkörper 11 in Achsenabstandsrichtung 6-6 verschiebbar geführte Gegengewicht 17 antreibt. In seinen den verschiedenen Schrittstellungen der Revolverscheibe 7.1 entsprechenden Lagen ist das Gegengewicht 17 im Futterkörper 11 feststellbar, nämlich mittels einer hydraulischen Klemmbuchse 18 verspannbar. Die Revolverscheibe 7.1 ist auf ihren beiden Stirnseiten gelagert, nämlich innerhalb des Futterkörpers bei 19' und 19", und auf der anderen Seite außen bei 19''' in einer am Futterkörper 11 befestigten, die Revolverscheibe 7.1 übergreifenden Lagertraverse 20.

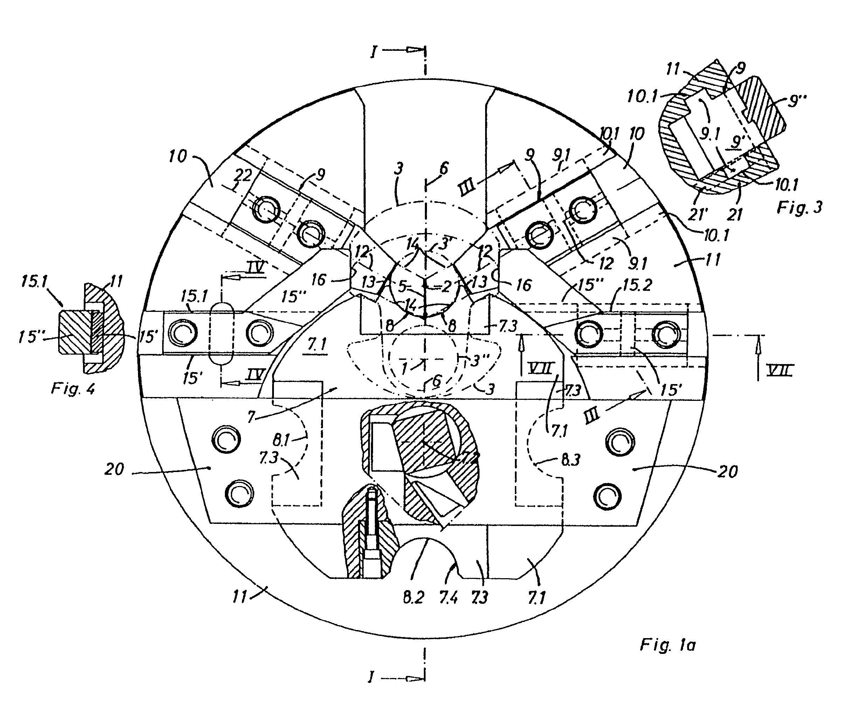

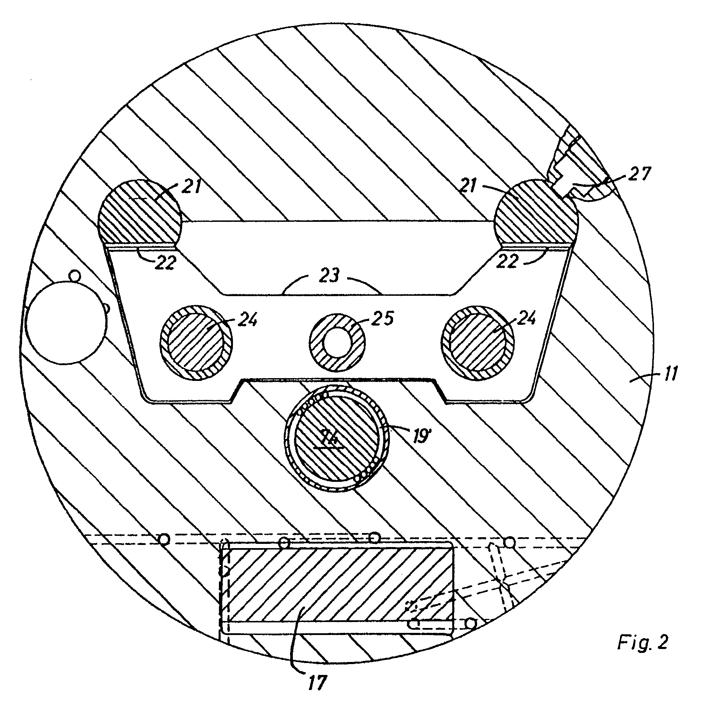

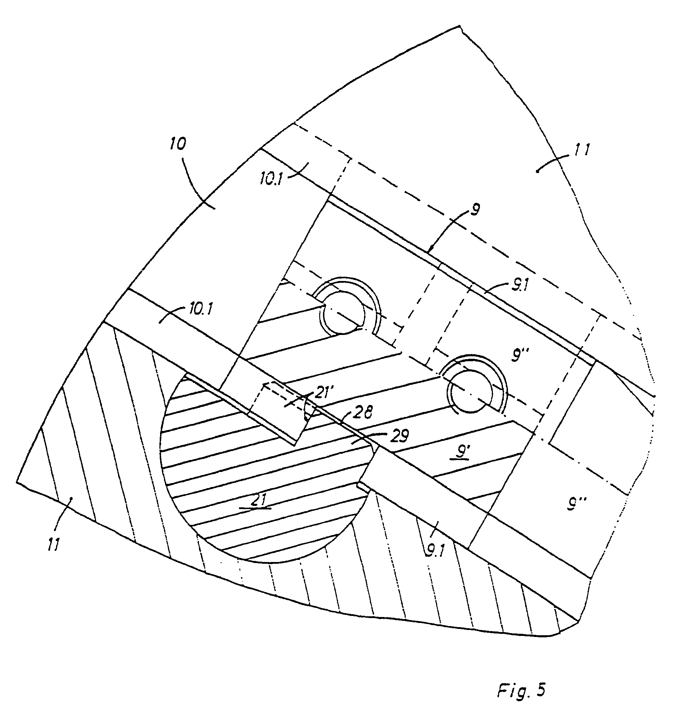

Die Führungen 10 der beiden gemeinsam antreibbaren, zentrisch spannenden Spannbacken 9 sind in üblicher Weise als Geradführungen ausgebildet, deren in Führungsrichtung verlaufende Mittelachse 12 sich in der Achsenabstandsebene in der Mitte ded Achsenabstandsbereichs 5 schneiden. Zum Antrieb der beiden zentrisch spannenden Spannbacken 9 dienen im Futterkörper 11 axial geführte Keilstangen 21, die bei 22 axial formschlüssig in eine Treibplatte 23 eingehängt sind, die ihrerseits an Säulen 24 axial im Futterkörper 11 geführt ist. Die Treibplatte 23 ist an einen Treibkolben 25 angeschlossen, der über eine Schraube 26 in an sich bei kraftbetätigten Backenspannfuttern bekannter Weise an eine in der hohlen Drehmaschinenspindel verlaufende Spannstange anschließbar ist, die am anderen Ende der Drehmaschinenspindel durch einen dort vorgesehenen Spannzylinder betätigt wird. Die Keilstangen 21 sind im Querscnitt kreisrunde Bolzen, die durch in Fig. 2 bei 27 dargestellte Bolzen, welche in Längsnuten der Keilstangen 21 greifen, gegen Verdrehung um die Keilstangenachse gesichert sind. Weiter besitzen die Keilstangen 21 Keilflächen 21', mit welchen sie entsprechenden Schrägflächen der Spannbacken 9 anliegen, so daß Axialverstellungen der Keilstangen 21 entsprechende Verstellungen der Spannbaken 9 in ihrer Führungsrichtung 12-12 zur Folge haben. Die Spannbacken 9 laufen in die Führungen 10 bildenden Nuten des Futterkörpers 11 und greifen mit seitlichen Rippen 9.1 in entsprechende Ausnehmungen 10.1 in den Nutseitenwänden. Jeweils eine der Führungsrippen 9.1 besitzt und einen Durchbruch 28 für eine Schulter 29 der Keilstange 21 und ist an diesem Durchbruch 28 mit der der Keilfläche 21' der Keilstange 21 entsprechenden und ihr anliegenden Schrägfläche versehen, wie dies insbes. aus Fig. 5 ersichtlich ist. Im Ausführungsbeispiel besitzen diese Spannbakken 9 zweiteiligen Aufbau, nämlich aus einer Grundbacke 9' und einer darauf auswechselbar befestigten Aufsatzbacke 9", die mit der Spannfläche 13 der Spannbacke 9 versehen ist.

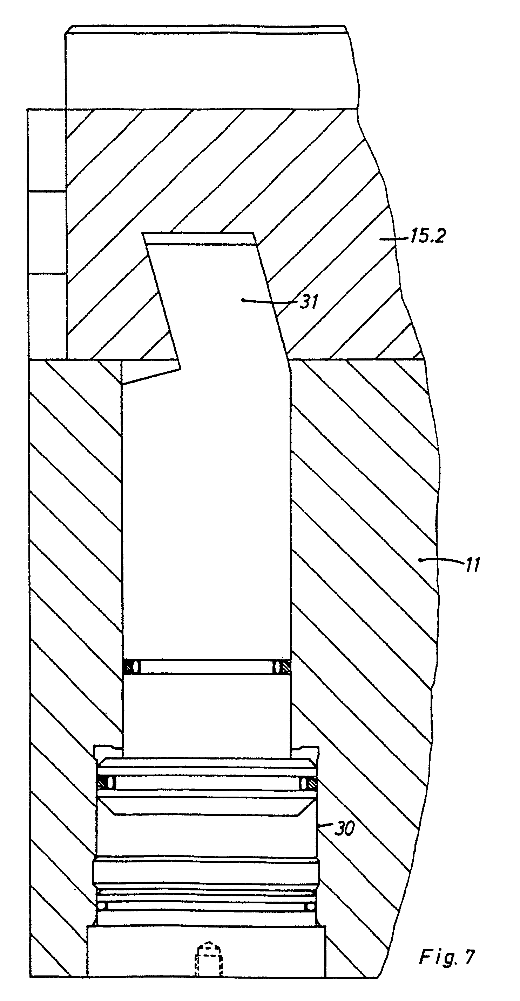

Die in Fig. 1a linke Richtbacke 15.1 ist zwar verstellbar, um den jeweiligen Werkstückabmessungen angepaßt werden zu können, steht jedoch beim üblichen Werkstückwechsel und -ausrichten fest. Die in Fig. 1a rechte Richtbacke 15.2 dagegen ist bei jedem Werkstückwechsel verstellbar, um nach dem Einlegen des Werkstücks dieses auszurichten und gleichzeitig leicht zu fixieren, bis es anschließend durch die Spannbacken 9 gespannt wird.Der Antrieb dieser Richtbacke 15.2 erfolgt durch einen eigenen Hydraulikzylinder 30 im Futterkörper 11 entsprechend Fig. 7 über ebenfalls eine Keilstange 31. Im übrigen sind auch die Richtbacken aus jeweils Grundbacke 15' und auswechselbarer Aufsatzbacke 15" zusammengesetzt.

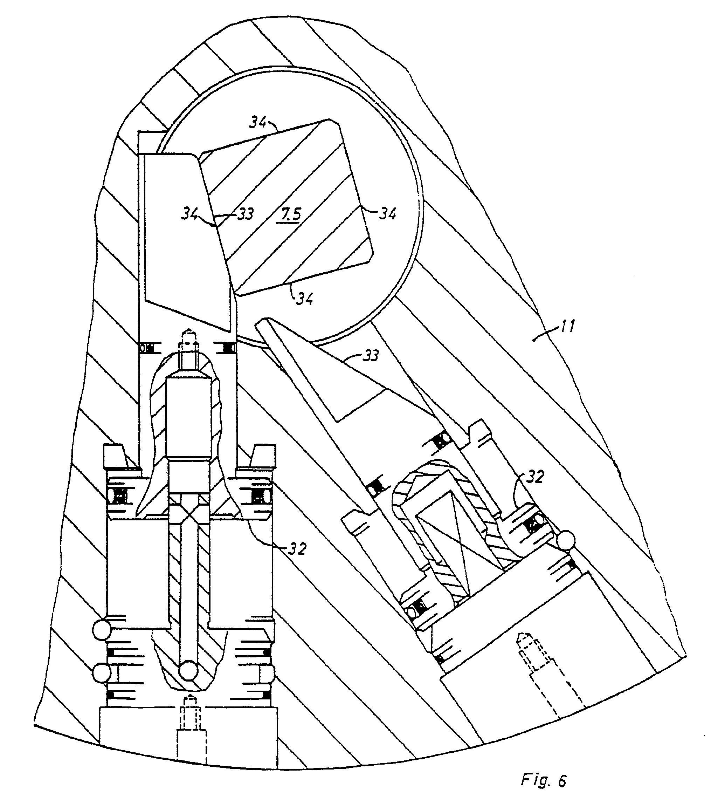

Die Revolverscheibe 7.1 wird über zwei im Futterkörper 11 angeordnete Spannkolben 32 entsprechend Fig. 6 schrittweise verstellt, wozu die beiden Spannkolben über Schrägflächen 33 auf die ebenen Seitenflächen 34 eines im Querschnitt quadratischen Abschnitts 7.5 der Revolverscheibenwelle nacheinander einwirken. Dabei dreht jedar Kolben 32 die Revolverscheibe 7.1 um jeweils 45° weiter und der in Fig. 6 senkrecht stehende linke Kolben 32 verriegelt nach jeweils vollzogener Drehung über insgesamt 90° in seiner vorgeschobenen, in Fig. 6 gezeigten Stellung die Revolverscheibe 7.1. Gleichzeitig mit der Drehung der Revolverscheibe 7.1 erfolgt in der schon beschriebenen Weise auch die Verstellung des Gegengewichtes 17. Gegen Drehung um ihre eigene Achse sind die im Querschnitt kreiszylindrischen Kolben 32 durch am Futterkörper 11 feste Leisten 35 gesichert, die in entsprechenden Nuten der Kolben 32 eingreifen.

Die Zeichnung zeigt den Fall, daß die Spannachse 2 fast am äußeren Ende des Achsenabstandsbereichs 5 liegt. Das bedeutet, daß die Spannfläche 8 einen großen Abstand von der Revolverachse 7.2 besitzt. Die Anlage der Kurbelwelle 3 an den zentrisch spannenden Spannbacken 9 erfolgt dabei praktisch am äußeren Ende der Spannflächen 13, gesehen von der Spannfläche 8 aus. Die anderen Spannflächen 8.1, 8.2, 8.3 an der Revolverscheibe 7.1 besitzen geringeren Abstand von der Revolverachse 7.2. Wird daher die Revolverscheibe 7.1 in Fig. 1a um beispielsweise 180° gedreht, so daß die Spannfläche 8.2 den zentrisch spannenden beiden Spannbacken 9 gegenüber liegt, wird der Abstand zwischen der Drehachse 1 und der Spannachse 2 geringer und die Werkstückanlage an den Spannflächen 13 verschiebt sich entsprechend zum inneren Spannflächenende hin. Mit dem dargestellten Spannfutter können also Kurbelwellen verschiedenen Kurbelhubs, jedoch mit im wesentlichen gleichbleibendem Spanndurchmesser bearbeitet werden. Um auch Kurbelwellen mit anderen Spanndurchmessern bearbeiten zu können, müssen die Aufsatzbacken 9" an den beiden zentrisch spannenden Spannbacken 9, ferner die Aufsatzbacken 15" an den Richtbacken 15.1, 15.2 und schließlich die Spannflächeneinsätze 7.3 an der Revolverscheibe 7.1 ausgetauscht werden.

**Patentansprüche**

1. Dreibacken-Spannfutter für Drehmaschinen zum Spannen von Werkstücken in Bezug auf eine zur Drehachse (1) des Spannfutters exzentrische Spannachse (2), insbesondere von Kurbelwellen (3), mit einer Einrichtung zur Änderung des Achsenabstands (4) zwischen der Drehachse (1) und der dazu parallelen Spannachse (2) innerhalb eines Achsenabstandsbereichs (5) längs einer radial durch die Drehachse 1 gehenden Achsenabstandsrichtung (6-6), wobei eine der Spannbacken (7) mit ihrer Spannfläche (8) die in Achsenabstandsrichtung (6-6) durch die Drehachse (1) gehende Achsenabstandsebene senkrecht zur Achsenabstandsrichtung schneidet und so verstellbar ist, daß sich die Lage der Spannfläche (8) in Achsenabstandsrichtung (6-6) ändert, und wobei die dieser Spannbacke (7) gegenüber liegenden beiden anderen Spannbacken (9) auf je einer Seite der Achsenabstandsebene in zu ihr spiegelsymmetrisch geneigten Führungen (10) verstellbar angeordnet und gemeinsam antreibbar sind.
dadurch gekennzeichnet, daß die mit ihrer Spannfläche (8) die Achsenabstandsebene schneidende Spannbacke (7) einerseits und die beiden gemeinsam antreibbaren Spannbacken (9) andererseits unabhängig voneinander in bzw. an einem Futterkörper (11) verstellbar sind, der seinerseits unverstellbar an der Drehspindel der Drehmaschine sitzt, daß die beiden gemeinsam antreibbaren Spannbacken (9) stirnseitig je eine auf der Führungsrichtung (12-12) ihrer Spannbacke (9) senkrecht stehende ebene Spannfläche (13) aufweisen, und daß in mindestens einer zur Drehachse (1) senkrechten und diese Spannflächen (13) schneidenden Ebene bei jeder der beiden gemeinsam antreibbaren Spannbacken (9) die auf die Ebene ihrer Spannfläche (13) senkrechte Projektion des Achsenabstandsbereichs (5) in der Spannfläche (13) liegt.

2. Spannfutter nach Anspruch 1, dadurch gekennzeichnet, daß am Futterkörper (11) zwei senkrecht zur Achsenabstandsebene sich gegenüber liegende und verstellbare Richtbacken (15.1, 15.2) vorgesehen sind, von welchen eine antreibbar ist, und daß beide Richtbacken zur Achsenabstandsebene parallele Richtflächen (16) aufweisen, die sich in Achsenabstandsrichtung (6-6) mindestens über die Länge des Achsenabstandsbereichs (5) erstrecken.

3. Spannfutter nach Anspruch 1 oder 2, dadurch gekennzeichnet, daß die mit ihrer Spannfläche (8) die Achsenabstandsebene schneidende Spannbacke (7) als eine Revolverscheibe (7.1) ausgebildet ist, die mit zur Drehachse (1) paralleler Revolverachse (7.2) am Futterkörper (11) drehbar gelagert und in Drehrichtung schrittweise antreibbar sowie in den verschiedenen Schrittstellungen feststellbar ist, daß die Spannfläche (8) zu mehreren (8.1, 8.2, 8.3) entlang dem Umfang der Revolverscheibe (7.1) mit jeweils anderem radialen Abstand von der Revolverasche (7.2) angeordnet ist und daß diese Spannflächen (8, 8.1, 8.2, 8.3) den verschiedenen Schrittstellungen der Revolverscheibe (7.1) derart zugeordnet sind, daß in jeder Schrittstellung jeweils eine der Spannflächen (8, 8.1, 8.2, 8.3) die Achsenabstandsebene schneidet.

4. Spannfutter nach Anspruch 3, dadurch gekennzeichnet, daß die Spannflächen (8, 8.1, 8.2, 8.3) an Einsätzen (7.3) der Revolverscheibe (7.1) ausgebildet sind.

5. Spannfutter nach Anspruch 3 oder 4, dadurch gekennzeichnet, daß die Spannfläche (8) bzw. Spannflächen (8.1, 8.2, 8.3) als Zylinderschalen (7.4), insbesondere Zylinderhalbschalen, mit in Spannstellung zur Spannachse (2) koaxialer Zylinderachse ausgebildet sind.

6. Spannfutter nach einem der Ansprüche 3 bis 5, dadurch gekennzeichnet, daß ein zum Unwuchtausgleich dienendes Gegengewicht (17) durch die sich drehende Revolverscheibe (17.1) verstellbar ist.

7. Spannfutter nach Anspruch 6, dadurch gekennzeichnet, daß die Revolverscheibe (17.1) einen zur Revolverachse (7.2) koaxialen Wellenzapfen (7.4) aufweist, der über eine Steuerkurve (7.5) das im Futterkörper (11) in Achsenabstandsrichtung (6-6) verschiebbar geführte Gegengewicht (17) antreibt, das zumindest in seinen den verschiedenen Schrittstellungen der Revolverscheibe (7.1) entsprechenden Lagen im Futterkörper (11) feststellbar ist.

8. Spannfutter nach einem der Ansprüche 3 bis 7, dadurch gekennzeichnet, daß die Revolverscheibe (7.1) auf beiden Seiten gelagert und dazu stirnseitig am Futterkörper (11) eine die Revolverscheibe (7.1) übergreifende Lagertraverse (20) vorgesehen ist.

9. Spannfutter nach einem der Ansprüche 1 bis 8, dadurch gekennzeichnet, daß die Führungen (10) der beiden gemeinsam antreibbaren Spannbacken (9) als Geradführungen ausgebildet sind, deren in Führungsrichtung (12-12) verlaufenden Mittelachsen sich in der Achsenabstandsebene in der Mitte des Achsenabstandsbereichs (5) schneiden.

## Claims

1. A three-jaw chuck for lathes for clamping workpieces in relation to a clamping axis (2) which is eccentric relative to the axis of rotation (1) of the chuck, in particular for clamping crankshafts (3), comprising a means for altering the interaxial spacing (4) between the axis of rotation (1) and the clamping axis (2) which is parallel thereto, within an interaxial spacing range (5), along an interaxial spacing direction (6- 6) which passes radially through the axis of rotation (1), wherein one of the clamping jaws (7) with its clamping surface (8) intersects perpendicularly to the interaxial spacing direction the interaxial spacing plane which passes through the axis of rotation (1) in the interaxial spacing direction (6-6), and is so displaceable that the position of the clamping surface (8) alters in the interaxial spacing direction (6-6), and wherein the other two clamping jaws (9) which are disposed in opposite relationship to said clamping jaw (7) are arranged adjustably on respective sides of the interaxial spacing plane in guides (10) which are inclined in mirror-image symmetry relative to said interaxial spacing plane and are jointly drivable characterised in that the clamping jaw (7) which intersects the interaxial spacing plane with its clamping surface (8) on the one hand and the two jointly drivable clamping jaws (9) on the other hand are displaceable independently of each other in or on a chuck body (11) which in turn is carried non-displaceably on the rotary spindle of the lathe, that the two jointly drivable clamping jaws (9) each have at their end a respective flat clamping surface (13) which is disposed perpendicularly to the guide direction (12-12) of their clamping jaw (9), and that in at least one plane which is perpendicular to the axis of rotation (1) and which intersects said clamping surfaces (13), in each of the two jointly drivable clamping jaws (9), the projection, which is perpendicular to the plane of the clamping surface (13) thereof, of the interaxial spacing range (5) lies in the clamping surface (13).

2. A chuck according to claim 1 characterised in that provided on the chuck body (11) are two aligning jaws (15. 1, 15. 2) which are adjustable and disposed in mutually opposite relationship perpendicularly to the interaxial spacing plane and of which one is drivable, and that both aligning jaws have aligning surfaces ( 16 ) which are parallel to the interaxial spacing plane and which extend in the interaxial spacing direction (6-6) at least over the length of the interaxial spacing range (5).

3. A chuck according to claim 1 or claim 2 characterised in that the clamping jaw (7) which with its clamping surface (8) intersects the interaxial spacing plane is in the for of a turret disc (7.1) which is mounted rotatably on the chuck body (11) with a turret axis (7.2) parallel to the axis of rotation (1) and which is drivable in a stepwise manner in the direction of rotation and which can be fixed in the various step positions, that the clamping surface (8) is arranged in pluralities (8.1, 8.2, 8.3) along the periphery of the turret disc (7.1) each at a different radial spacing from the turrt axis (7.2) and that said clamping surfaces (8, 8.1, 8.2, 8.3) are associated with the various step positions of the turret disc (7.1) in such a way that in each step position a respective one of the clamping surfaces (8, 8.1, 8.2, 8.3) intersects the interaxial spacing plane.

4. A chuck according to claim 3 characterised in that the clamping surfaces (8, 8.1, 8.2, 8.3) are provided on inserts (7. 3) in the turret disc (7.1).

5. A chuck according to claim 3 or claim 4 characterised in that the clamping surface (8) or clamping surfaces (8.1, 8.2, 8.3) are in the for of cylindrical shells (7.4), in particular cylindrical half-shells, with a cylinder axis which is coaxial with the clamping axis (2) in the clamping position.

6. A chuck according to one of claims 3 to 5 characterised in that a counterweight (17) which serves to compensate for unbalance is adjustable by means of the rotating turret disc (17,1).

7. A chuck according to claim 6 characterised in that the turret disc (17,1) has a shaft journal (17.4) which is coaxial with respect to the turret axis (7.2) and which by way of a control cam (7.5) drives the counterweight (17) which is guided displaceably in the chuck body (11) in the interaxial spacing direction (6-6) and which can be fixed in the chuck body (11) at least in its positions corresponding to the various step positions of the turret disc (7.1).

8. A chuck according to one of claims 3 to 7 characterised in that the turret disc (7.1) is supported on both sides and for that purpose provided on the chuck body (11) at the face thereof is a transverse mounting member (20) which extends over the turret disc (7.1).

9. A chuck according to one of claims 1 to 8 characterised in that the guides (10) for the two jointly drivable clamping jaws (9) are in the form of straight guides whose centre lines which extend in the guide direction (12-12) intersect in the interaxial spacing plane at the centre of the interaxial spacing range (5).

## Revendications

1. Mandrin de serrage à trois mâchoires pour tours pour la fixation de pièces à usiner par rapport à un axe de serrage (2) excentré par rapport à l'axe de rotation (1) du mandrin de serrage, en particulier de vilebrequins (3), comprenant un dispositif pour la variation de la distance (4) entre l'axe de rotation (1) et l'axe de serrage (2) qui lui est parallèle à l'intérieur d'une plage d'entraxe (5) le long d'une direction d'entraxe (6-6) passant radialement par l'axe de rotation (1), l'une des mâchoires de serrage (7) coupant avec sa surface de serrage (8), perpendiculairement à la direction d'entraxe (6-6), le plan d'entraxe passant dans la direction d'entraxe par l'axe de rotation (1) et pouvant être réglée de telle façon que la position de la surface de serrage (8) est modifiée dans la direction d'entraxe (6-6), et les deux autres mâchoires de serrage (9) situées en face de cette mâchoire de serrage (7) étant disposées chacune de manière réglable de l'un des côtés du plan d'entraxe, dans des guidages (10) inclinés à symétrie de miroir vers celui-ci et pouvant être entraînées en commun, **caractérisé par le fait** que d'une part la mâchoire de serrage (7) dont la surface de serrage (8) coupe le plan d'entraxe et d'autre part les deux mâchoires de serrage (9) pouvant être entraînées en commun peuvent être déplacées indépendamment dans et respectivement sur un corps de mandrin (11) lequel est monté à son tour de manière fixe sur la broche tournante du tour; que les deux mâchoires de serrage (9) pouvant être entraînées en commun présentent chacune du côté frontal une surface de serrage (13) plane orientée perpendiculairement à la direction de guidage (12-12) de sa mâchoire de serrage (9); et que dans au moins un plan perpendiculaire à l'axe de rotation (1) et coupant ces surfaces de serrage (13), pour chacune des deux mâchoire de serrage (9) pouvant être entraînées en commun, la projection de la plage d'entraxe (5) perpendiculairement au plan de leur surface de serrage (13) se situe dans ladite surface de serrage (13).

2. Mandrin de serrage selon la revendication 1, caractérisé par le fait que sur le corps de mandrin (11) sont prévues deux mâchoires de dressage (15.1, 15.2) réglables disposées en face l'une de l'autre et perpendiculairement au plan d'entraxe, dont l'une peut être entraînée; et que les deux mâchoires de dressage présentent des surfaces de dressage (16) orientées parallèlement au plan d'entraxe, qui s'étendent dans la direction d'entraxe (6-6) au moins sur la longueur de la plage d'entraxe (5).

3. Mandrin de serrage selon l'une des revendications 1 ou 2, caractérisé par le fait que la mâchoire de serrage (7) dont la surface de serrage (8) coupe le plan d'entraxe, est réalisée sous la forme d'un disque revolver (7.1) qui est monté de manière tournante sur le corps de mandrin (11), l'axe de tourelle (7.2) étant parallèle à l'axe de rotation (1), peut être entraîné pas à pas dans le sens de rotation et bloqué dans les différentes positions d'arrêt; qu'une pluralité de surfaces de serrage (8, 8.1, 8.2, 8.3) est disposée le long de la périphérie du disque revolver (7.1), à savoir respectivement à une autre distance radiale par rapport à l'axe de tourelle (7.2); et que ces surfaces de serrage (8, 8.1, 8.2, 8.3) sont associées aux différentes positions d'arrêt du disque revolver (7.1) de telle façon que dans chaque position d'arrêt respectivement l'une des surfaces de serrage (8, 8.1, 8.2, 8.3) coupe le plan d'entraxe.

4. Mandrin de serrage selon la revendication 3, caractérisé par le fait que les surfaces de serrage (8, 8.1, 8.2, 8.3) sont conformées sur des inserts (7.3) du disque revolver (7.1).

5. Mandrin de serrage selon l'une des revendications 3 ou 4, caractérisé par le fait que la surface de serrage (8) et respectivement les surfaces de serrage (8.1, 8.2, 8.3) sont réalisées sous la forme de coques cylindriques (7.4), en particulier de demi-coques cylindriques, l'axe du cylindre étant orienté coaxialement par rapport à l'axe de serrage (2) dans la position de serrage.

8

6. Mandrin de serrage selon l'une des revendications 3 à 5, caractérisé par le fait qu'un contrepoids (17) destiné à compenser le balourd peut être déplacé par le disque revolver (7.1) en rotation.

7. Mandrin de serrage selon la revendication 6, caractérisé par le fait que le disque revolver (7.1) comprend, coaxialement à l'axe de tourelle (7.2), un pivot (7.4) qui, par l'intermédiaire d'une came de commande (7.5), entraîne le contrepoids (17) guidé de manière mobile dans le corps de mandrin (11) dans la direction d'entraxe (6-6), lequel contrepoids peut être bloqué au moins dans ses positions dans le corps de mandrin (11) correspondant aux différentes positions d'arrêt du disque revolver (7.1).

8. Mandrin de serrage selon l'une des revendications 3 à 7, caractérisé par le fait que le disque revolver (7.1) est fixé des deux côtés et qu'à cet effet une traverse de support (20) recouvrant ledit disque revolver (7.1) est prévue du côté frontal sur le corps de mandrin (11).

9. Mandrin de serrage selon l'une des revendications 1 à 8, caractérisé par le fait que les guidages (10) des deux mâchoires de serrage (9) à entraînement commun sont conformés en guidages droits dont les axes médians s'étendant dans la direction de guidage (12-12) se coupent dans le plan d'entraxe, au milieu de la plage d'entraxe (5).

Fig. 1

Fig. 3

Fig. 1a

Fig. 4

Fig. 2

EP 0 250 724 B1

Fig. 5

Fig. 6

15.2

31

11

30

*Fig. 7*